**Europäisches Patentamt**

**European Patent Office**

**Office européen des brevets**

(19)

(11) Numéro de publication : **0 013 223**
**B1**

(12) # FASCICULE DE BREVET EUROPÉEN

(45) Date de publication du fascicule du brevet :
**26.01.83**

(51) Int. Cl.³ : **H 04 B  1/04,** H 01 P  1/212

(21) Numéro de dépôt : **79401033.0**

(22) Date de dépôt : **18.12.79**

---

(54) **Dispositif de filtrage d'harmoniques pour émetteur radioélectrique.**

---

(30) Priorité : **29.12.78 FR 7836958**

(43) Date de publication de la demande :
**09.07.80 Bulletin 80/14**

(45) Mention de la délivrance du brevet :
**26.01.83 Bulletin 83/04**

(84) Etats contractants désignés :
**CH DE GB NL SE**

(56) Documents cités :
**DE B 1 173 598**
**DE C 317 541**
**DE C 397 864**
**DE C 452 662**
**DE C 868 188**
**GB A 475 397**
**GB A 609 231**
**US A 1 644 004**
**US A 3 710 284**
**US E 20 859**

(73) Titulaire : **THOMSON-CSF**
**173, Boulevard Haussmann**
**F-75379 Paris Cedex 08 (FR)**

(72) Inventeur : **Ursenbach, François**
**"THOMSON-CSF" - SCPI 173, bld Haussmann**
**F-75360 Paris Cedex 08 (FR)**

(74) Mandataire : **Courtellemont, Alain et al**
**THOMSON-CSF SCPI 173, Bld Haussmann**
**F-75379 Paris Cedex 08 (FR)**

Jouve, 18, rue St-Denis, 75001 Paris, France

Dispositif de filtrage d'harmoniques pour émetteur radioélectrique

La présente invention concerne les dispositifs de filtrage d'harmoniques destinés plus particulièrement aux stations d'émission équipées d'émetteurs radioélectriques de grande et de très grande puissance (respectivement au-delà de 100 kW et de 1 000 kW). Les émetteurs de grande et de très grande puissance sont généralement équipés, au-delà des circuits d'anode (ou circuits de sortie), de dispositifs de filtrage d'harmoniques. Les dispositifs de filtrage d'harmoniques connus sont des circuits réactifs à constantes localisées ou réparties, associés à la ligne de transmission entre l'émetteur et la charge. Leur but est d'éliminer les signaux harmoniques produits en même temps que le signal fondamental ou signal utile. Ces dispositifs de filtrage d'harmoniques peuvent être de types très variés : passe-bas, passe-bande, rejecteur ponctuel. Suivant le type d'émetteur et la bande de fréquence à couvrir ils sont fixes ou accordables. Dans tous les cas ils sont conçus de manière à présenter à leur entrée la charge nominale avec une adaptation correcte à la fréquence fondamentale s'ils sont fermés sur leur impédance nominale de charge.

Par le brevet allemand DE-A-397 864 sont connus des dispositifs destinés à stabiliser un oscillateur, qui comportent, en particulier, n cellules de filtrages (n entier positif) disposées en cascade dans la ligne, et dans lesquels la cellule de tête, c'est-à-dire celle de ces cellules qui est la plus proche de l'extrémité de la ligne destinée à être connectée à l'oscillateur, est branchée en parallèle sur la ligne et est formée d'une résistance en série avec une inductance et une capacitance en parallèle.

Le problème de la réalisation d'une telle cellule de tête n'a jamais, à notre connaissance, été résolu jusqu'alors dans le cas où l'oscillateur est remplacé par un émetteur radioélectrique de grande ou de très grande puissance ; ceci est dû notamment au fait que les éléments de la cellule doivent pouvoir supporter des énergies très importantes et au fait que la cellule doit pouvoir être réglée facilement.

Le but de la présente invention est un dispositif de filtrage d'harmoniques comportant une cellule terminale du type décrit ci-avant mais qui soit utilisable en liaison avec un émetteur radioélectrique de grande ou de très grande puissance. Le dispositif de filtrage d'harmoniques tel qu'il est caractérisé dans les revendications, résout ce problème par une réalisation de type coaxial. Ce type permet, d'une part, d'utiliser une résistance du type charge à eau à pertes diélectriques et une inductance entourant la résistance et dont l'une des parois est refroidie par l'eau de la résistance et, d'autre part, de prévoir deux points de mesure destinés à obtenir facilement une information servant pour le réglage de la cellule.

Les avantages obtenus grâce à cette invention consistent, en particulier, dans le fait que la mise au point de l'émetteur peut se faire entièrement en usine.

L'invention sera mieux comprise et d'autres caractéristiques apparaîtront à l'aide de la description ci-après et des figures s'y rapportant qui représentent :

la figure 1, le schéma théorique d'un ensemble comportant un dispositif de filtrage selon l'invention,

les figures 2 et 4 les schémas théoriques de dispositifs de filtrage,

la figure 5, une vue détaillée d'un dispositif de filtrage selon l'invention.

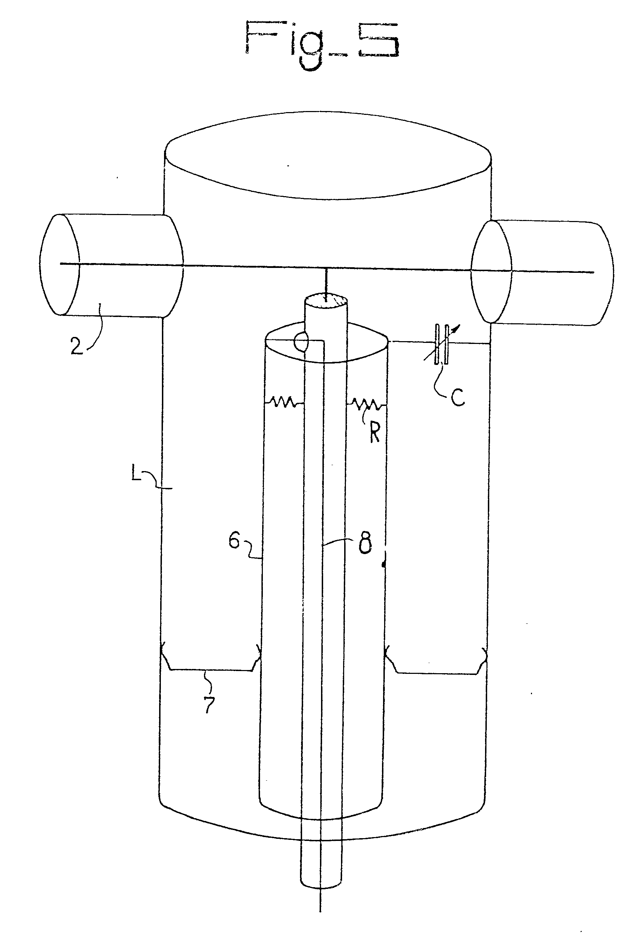

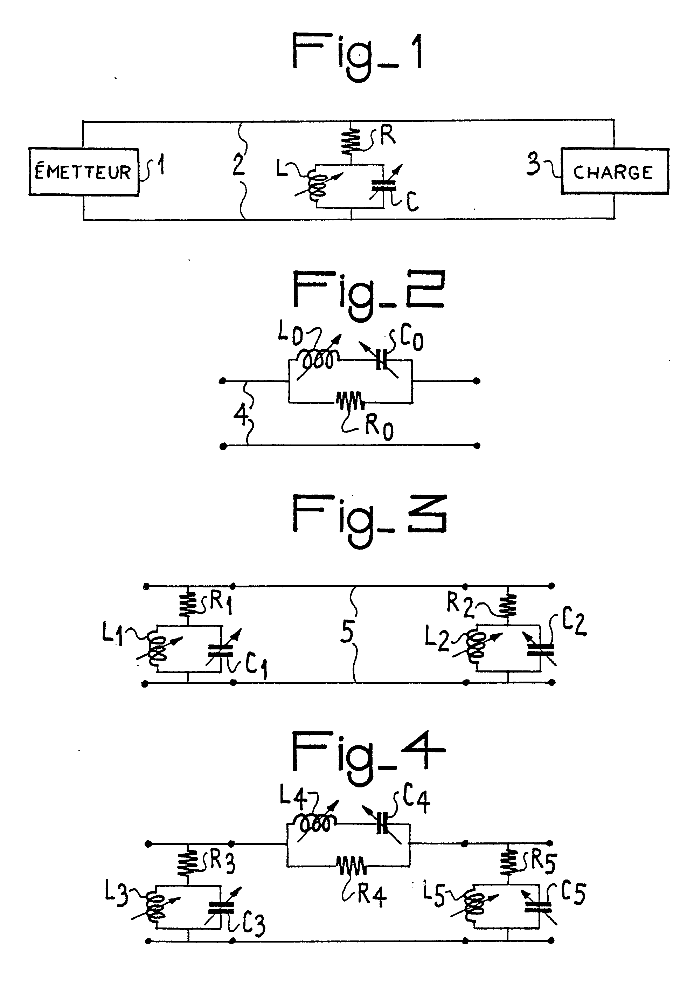

La figure 1 représente un émetteur de radiodiffusion, 1, qui, dans l'exemple décrit, est un émetteur de 500 kW, destiné à fonctionner dans la bande de fréquences allant de 3,2 MHz à 26,1 MHz. Cet émetteur est relié par une ligne à haute fréquence, 2, d'impédance caractéristique $Z = 75$ ohms à une charge 3 comprenant une antenne et son circuit d'adaptation. En parallèle sur la ligne 2 est connecté un dispositif de filtrage qui sera dit filtre à absorption et d'isolement. Ce dispositif de filtrage est constitué par une résistance R de valeur égale à $Z/20$, en série avec un circuit oscillant constitué d'une inductance L réglable et d'un condensateur C réglable. Le circuit oscillant L-C constitue un circuit antirésonnant, ou circuit bouchon, accordé sur la fréquence fondamentale de l'émetteur, pour laquelle il présente donc une impédance quasiment infinie ; il empêche donc le courant à la fréquence fondamentale de circuler dans la résistance R et d'y dissiper de l'énergie. Par contre, pour les fréquences harmoniques de la fréquence fondamentale, la réactance du circuit bouchon n'est plus infinie et des courants peuvent circuler dans la résistance R et y dissiper de l'énergie. Comme généralement, il est souhaité que la charge du circuit de sortie d'un émetteur soit une impédance faible pour les fréquences harmoniques, la valeur de la résistance a été choisie petite par rapport à l'impédance caractéristique Z de la ligne ; la pratique montre qu'une valeur de l'ordre de $Z/20$ convient bien. La valeur de l'impédance formée par la résistance R en série avec le circuit bouchon détermine l'effet de filtrage de ce dispositif de filtrage.

La résistance R introduit donc un amortissement et crée un masque, pour les fréquences harmoniques, des circuits placés en aval du dispositif de filtrage, c'est-à-dire un isolement entre la charge et l'émetteur. Ceci explique pourquoi le dispositif de filtrage a été appelé filtre à absorption et d'isolement.

La présence de la résistance R offre un autre intérêt. L'accord du circuit bouchon sur la fréquence fondamentale peut être effectué très facilement en recherchant à ses bornes un minimum (ou zéro) de tension pour la fréquence fondamentale. Cette propriété est importante pour effectuer un accord manuel ou automatique du circuit oscillant.

La figure 2 représente une cellule de filtrage destinée à être associée en cascade avec au moins un circuit L-C-R comme celui de la figure 1 pour constituer un dispositif de filtrage dans lequel la cellule la plus proche de l'émetteur sera un circuit L-C-R du type de celui selon la figure 1. La cellule selon la figure 2 comporte un tronçon de ligne, 4, de mêmes caractéristiques que la ligne 2 de la figure 1 et dans l'un des conducteurs duquel est disposée une résistance $R_0$ en parallèle sur une inductance $L_0$ et un condensateur $C_0$ en série. Le circuit $L_0$-$C_0$ a été calculé de manière à se comporter en circuit résonnant, c'est-à-dire qu'il présente une impédance quasiment nulle pour la fréquence fondamentale et une impédance importante pour les fréquences harmoniques, et d'autre part la résistance $R_0$ a été prise égale à 20 fois Z (Z : impédance caractéristique de la ligne 2 de la figure 1). La valeur de la résistance $R_0$ n'est pas critique et l'expérience montre qu'il suffit de donner à $R_0$ une valeur de l'ordre de 20 fois l'impédance caractéristique de la ligne.

La figure 3 est un schéma d'un dispositif de filtrage comportant deux cellules $L_1$-$C_1$-$R_1$, $L_2$-$C_2$-$R_2$ semblables à la cellule L-C-R de la figure 1. Les deux cellules $L_1$-$C_1$-$R_1$ et $L_2$-$C_2$-$R_2$ sont séparées par un tronçon de ligne, 5, d'une longueur réglable entre 6 et 10 mètres ; le dispositif de filtrage selon la figure 3 est destiné à remplacer le dispositif de filtrage L-C-R dans le montage de la figure 1.

Un dispositif de filtrage groupant des cellules du type de celle de la figure 1 et du type de celle de la figure 2 est représenté sur la figure 4. Le dispositif de filtrage selon la figure 4 comporte successivement une cellule $L_3$-$C_3$-$R_3$ du type de celle représentée sur la figure 1, une cellule $L_4$-$C_4$-$R_4$ du type de celle selon la figure 2 et une cellule $L_5$-$C_5$-$R_5$ du type de celle représentée sur la figure 1.

Le calcul montre et l'expérience confirme que l'impédance d'entrée d'un dispositif de filtrage du type de ceux qui viennent d'être décrits à l'aide des figures 1, 3 et 4, est pratiquement indépendante de la charge du dispositif de filtrage pour les fréquences harmoniques. Cela est important car la mise au point d'un émetteur peut se faire entièrement en usine sans se préoccuper de la charge aux fréquences harmoniques qui, dans le cas général, est quelconque. La figure 5 montre, plus en détail, le dispositif de filtrage L-C-R représenté sur la figure 1. L'inductance variable L est constituée par une ligne à haute fréquence, court-circuitée par un curseur 7 qui peut se déplacer de manière à faire varier la longueur de ligne et donc de l'inductance.

Le deuxième élément du circuit oscillant est formé par un condensateur variable C, connecté à l'entrée de l'inductance. Le conducteur intérieur de l'inductance renferme une résistance R ainsi qu'un câble de mesure coaxial, 8, destiné à faire l'accord du circuit oscillant L-C sur la fréquence de travail de l'émetteur. La résistance R, représentée schématiquement par deux résistances est réalisée sous forme d'une charge à eau, à pertes diélectriques. Le conducteur intérieur 6 de l'inductance L est également refroidi par l'eau de la charge. Les systèmes commandant la circulation d'eau n'ont pas été représentés pour ne pas surcharger le dessin ; ce sont des systèmes classiques en hyperfréquences et dont la représentation n'aurait rien amené de plus à la compréhension de l'invention.

Le circuit représenté sur la figure 5 permet d'assurer le réglage continu en fréquence dans une bande de plus de 3 octaves, correspondant à la bande des ondes courtes de 3,20 à 26,1 MHz.

## Revendications

1. Dispositif de filtrage d'harmoniques pour émetteur radioélectrique relié à une charge par une ligne, ce dispositif de filtrage comportant n cellules de filtrage (n entier positif) disposées en cascade dans la ligne, dont au moins la cellule de tête, c'est-à-dire la cellule la plus proche de l'extrémité de la ligne destinée à être connectée à l'émetteur, est branchée en parallèle sur la ligne et est formée d'une résistance en série avec une inductance et une capacitance en parallèle, caractérisé en ce que la cellule de tête comporte : une ligne coaxiale constituée, dans l'ordre, d'un conducteur externe, d'un premier (6) et d'un second conducteur intermédiaire et d'un conducteur interne (8) ; un court-circuit (7) et un condensateur (C) disposés entre le conducteur externe et le premier conducteur intermédiaire (6) pour former respectivement l'inductance (L) et la capacitance ; une charge interne (R) disposée entre le premier (6) et le second conducteur intermédiaire pour former la résistance ; et une liaison, à travers la paroi du second conducteur intermédiaire, entre l'une des extrémités du conducteur interne et le premier conducteur intermédiaire (6) pour déterminer avec l'autre extrémité du conducteur interne et l'extrémité correspondante du second conducteur intermédiaire deux points de mesure de la tension aux bornes de la résistance.

2. Dispositif de filtrage selon la revendication 1, caractérisé en ce que la charge (R) interne est constituée par un liquide à pertes diélectriques.

## Claims

1. Harmonic filtering device for radioelectric transmitters, connected to a load through a line and comprising n filtering stages (n integer positive) arranged in cascade in the line, at least the head stage, i.e. the stage closest to the end of the line to be connected to the transmitter, is branched in parallel across the line and formed of a resistor in series with an inductance and a parallel capacitance, characterized in that the head stage comprises : a coaxial line formed, in the order, of an external conductor, a first (6) and a second intermediate conductor and an internal conductor (8) ; a short circuit (7) and a capacitor (C) arranged between the external conductor and the first intermediate conductor (6) to form the inductance (L) and the capacitance, respectively ; an internal load (R) arranged between the first (6) and the second intermediate conductors to form the resistor ; and a connection through the wall of the second intermediate conductor, between one of the ends of the internal conductor and the first intermediate conductor (6) to determine with the other end of the internal conductor and the corresponding end of the second intermediate conductor, two points for measurement of the voltage at the terminals of the resistor.

2. Filtering device in accordance with claim 1, characterized in that the internal load (R) is formed by a dielectric loss liquid.

## Ansprüche

1. Vorrichtung zum Ausfiltern von Harmonischen für einen radioelektrischen Sender, der über eine Leitung an eine Last angeschlossen ist, wobei diese Filtervorrichtung n Filterstufen (n ganzzahlig und positiv) umfaßt, die in Kaskade in der Leitung angeordnet sind, wovon wenigstens die Eingangsstufe, das heißt diejenige Stufe, die dem Ende der Leitung am nächsten ist, das zum Anschließen an den Sender bestimmt ist, zu der Leitung parallelgeschaltet und aus einem Widerstand in Reihe mit einer Induktivität und einer Parallelkapazität gebildet ist, dadurch gekennzeichnet, daß die Eingangsstufe umfaßt : eine Koaxialleitung, die gebildet ist aus einem Außenleiter, daran anschließend einem ersten (6) und einem zweiten Zwischenleiter sowie einem darauffolgenden Innenleiter (8) ; einen Kurzschluß (7) und einen Kondensator (C), die zwischen dem Außenleiter und dem ersten Zwischenleiter (6) angeordnet sind, um die Induktivität (L) bzw. die Kapazität zu bilden ; eine interne Last (R), die zwischen dem ersten (6) und dem zweiten Zwischenleiter angeordnet ist, um den Widerstand zu bilden ; und eine Verbindung, die durch die Wand des zweiten Zwischenleiters hindurchgreift, zwischen dem einen Ende des Innenleiters und dem ersten Zwischenleiter (6) zur Bestimmung von zwei Meßpunkten zur Spannungsmessung an den Anschlüssen des Widerstandes zusammen mit dem anderen Ende des Innenleiters und dem entsprechenden Ende des zweiten Zwischenleiters.

2. Filtervorrichtung nach Anspruch 1, dadurch gekennzeichnet, daß die interne Last (R) durch eine Flüssigkeit mit dielektrischen Verlusten gebildet ist.

# Fig_5

# Fig_1

# Fig_2

# Fig_3

# Fig_4